# EUROPEAN PATENT SPECIFICATION

(11) **EP 0 736 072 B1**
(45) Date of publication and mention of the grant of the patent: **24.03.1999**
(21) Application number: 95904217.7
(22) Date of filing: 05.12.1994
(51) Int. Cl.: C09C 1/00, C09D 5/38

(54) **COATING COMPOSITION CONTAINING OPTICALLY-VARIABLE PIGMENT AND METALLIC PIGMENT**
OPTISCH VARIABLES PIGMENT UND METALLISCHES PIGMENT ENTHALTENDE BESCHICHTUNGZUSAMMENSETZUNG
COMPOSITION DE REVETEMENT A PIGMENTS OPTIQUEMENT VARIABLES ET A PIGMENTS METALLIQUES

(30) Priority: 23.12.1993 US 172402
(43) Date of publication of application: 09.10.1996
(73) Proprietor: BASF CORPORATION, Southfield, Michigan 48086-5009 (US)
(72) Inventor: JOHNSON, Daniel, W., Westland, MI 48185 (US)
(74) Representative: Münch, Volker, Dr.
(86) International application number: US9413888
(87) International publication number: WO9517474

(56) References cited:
- EP-A- 0 389 274
- US-A- 4 434 010

## Description

### Field of the Invention

This invention relates to coating compositions, and in particular to pigmented coating compositions useful for color-plus-clear composite coatings.

### Background of the Invention

Optically-variable thin-film pigment flakes have been described in the art for a variety of applications, such as inks for counterfeit-proof applications such as currency, and generically for coating compositions. They are described, for example, in U.S. Patents 4,434,010, 4,704,356, 4,779,898, 4,838,648, 4,930,866, 5,059,245, 5,135,812, 5,171,363, and 5,214,530. These pigments are prepared by depositing inorganic transparent dielectric layers, semi-transparent metal layers, and metal reflecting layers onto a flexible web, and separating the layers from the web in such a manner as to fragment the deposited thin film layer structure into pigment particles. These particles are in the form of irregularly-shaped flat pigment flakes. These pigments are capable of producing dramatic visual effects, including dichroic effects not observed in other types of pigments.

EP-A 389 274 discloses optical interference structures that shall provide a dichroic effect. The structures disclosed include foils, labels and other large optical structures.

US-A-4 434 010 discloses optically-variable thin-film pigments that may be combined with certain colored dyes or pigments in paints to achieve other color effects.

Therefore, though optically-variable thin-film pigments are known for coating compositions,

In many cases, however, the visual effect of the pigment may be too dramatic to be useful in coating compositions for commercial applications. Moreover, due to cost or other considerations, the optimal level of the optically-variable thin-film pigment in a coating composition may not be sufficient to provide adequate hiding. It is therefore an object of the present invention to provide coating compositions that have good hiding power, and which allows for control of the degree of the observed visual effect of the optically-variable thin-film pigment without significantly altering the nature of that effect.

### Summary of the Invention

According to the present invention, there is provided a coating composition is described comprising a polymer resin binder and optically variable thin film pigment flakes, said pigment flakes having a multilayer thin film interference structure comprising a metal reflector layer having first and second parallel planar surfaces and, disposed on at least one of said first and second planar surfaces at least one transparent dielectric layer, said coating composition further comprising a metallic pigment of the same color as the metal in the metal reflector layer of the multilayer thin film interference structure. This coating composition can be used to prepare a variety of coatings, especially color-plus-clear composite coatings such as those used in the automotive industry.

### Description of the Preferred Embodiments

Optically-variable thin-film pigment flakes are well-known in the art. Their characteristics and their preparation is described in U.S. Patents 4,434,010, 4,704,356, 4,779,898, 4,838,648, 4,930,866, 5,059,245, 5,135,812, 5,171,363, and 5,214,530, the disclosures of which are incorporated herein by reference in their entirety.

Optically-variable thin-film pigment flakes are prepared by depositing onto a flexible web combinations of transparent dielectric layers, semi-opaque metal layers, and metal reflecting layers to form a multilayer thin film interference structure. The interference structure typically has at least one metal reflecting layer and at least one transparent dielectric layer. Various combinations of these layers can be utilized to achieve the desired optically variable effect. In a preferred embodiment, the interference structure produces a dichroic optical effect and has in order, on one side of the metal reflecting layer, at least one transparent dielectric layer and at least one semi-opaque metal layer. In a particularly preferred embodiment, this layer structure is symmetrical on both sides of the metal reflecting layer.

Aluminum is often used as the metal reflecting layer for a variety of reasons such as its cost and commercial availability, although other materials, such as gold, copper, or silver can also be used. The semi-opaque metal layer can be formed from metals such as chromium, nickel, or Inconel. The transparent dielectric layers can be formed from materials such as silicon dioxide, magnesium fluoride, or aluminum oxide. Layer thicknesses can be varied according to the particular desired characteristics of the pigment. For example, U.S. 5,135,812 describes useful thicknesses being on the order of 80 nm for the metal reflecting layer, 5 nm for the semi-opaque metal layers, and thicknesses of a plurality of halfwaves of the particular design wavelength for the transparent dielectric layers.

As mentioned above, the optically-variable thin-film pigment flakes are prepared by coating the semi-opaque metal layers, transparent dielectric layers, and metal reflecting layer onto a flexible web, and separating the web from the multilayer structure to form the pigment flakes. The web is typically a polymer material, such as polyvinyl alcohol or polyethyleneterephthalate. The separation can be accomplished by stripping the multilayer structure from the web, in which case a stripping layer, as is known in the art, is preferably deposited onto the web prior to the other layers. Heat and/or solvent may be used to facilitate the stripping process. Alternatively, the web may be dissolved in a suitable solvent (aqueous or organic, depending on the solubility of the web material) to accomplish the separation. The coated web may optionally be cut or shredded to more easily fit into a container prior to the dissolution step.

As the multilayer structure is separated from the web, it typically breaks into flakes of irregular shapes and sizes. These flakes will usually require further processing to achieve the size requirements of the present invention. This can be accomplished by techniques known in the art, such as ultrasonic agitation, milling, or grinding. It may be preferred to use various combinations of solvents, surfactants, and/or resins during the size reduction process, as is known in the art.

In a preferred embodiment, the above-described techniques are used to achieve the desired average particle size of 5 to 40 µm and the desired particle size distribution where no more than 10% of the particles have a particle size of greater than 50 µm and substantially none of the particles have a particle size of greater than 125 µm, as described in the U.S. patent application entitled "Coating Composition Containing Optically-Variable Pigment", filed on even date herewith in the names of Kendall Scott and Daniel W. Johnson. It may, however, be necessary to use microscopic filtering techniques, as is known in the art, to assure that the desired particle size distribution is achieved.

The metallic pigment used in the present invention should be chosen to have similar color and other visual characteristics (e.g., reflectivity) as the metal reflector layer of the multilayer thin-film interference structure. The metallic pigment can be present at levels of 0-50% by weight of the total pigment in the composition, and is preferably present at levels of 3-25%. The metallic pigment is made up of particles, which may be aluminum, gold bronze (copper-zinc alloys), copper, nickel, brass, magnesium, zinc, and alloys of these, depending on the characteristics of the metal reflector layer in the multilayer thin-film interference structure. Preferably, the metallic particles are aluminum, gold bronze, brass, and zinc. Aluminum is particularly preferred for both the reflector layer and the metallic pigment.

Metallic particles as contemplated for use with the invention generally have a surface area that may range from about 0.05 to about 15 m²/g of aluminum. The metallic particles that are specifically contemplated as preferred aspects of the invention are metallic flakes, powders and granules. Flake pigments are particularly preferred. In a preferred aspect, the surface area of the flake is from about 2 to about 14.5 m²/g. The average particle size of the flake pigment is preferably from 1 to 70 microns, more preferably from 5 to 50 microns.

Metallic particles, such as aluminum flake pigment, used in the present invention may be prepared by grinding fine pieces or granules of metal by a mechanical means; for example, in a stamp mill, dry type ball mill, wet type ball mill attritor, or vibrating ball mill. Several percent of a grinding aid, or lubricant, may optionally be used. Useful grinding aids are known in the art, and include higher saturated or unsaturated acids, e.g., stearic acid, oleic acid, and higher aliphatic amines, such as stearylamine.

The metallic pigment may be ground in an organic solvent medium. Suitable organic solvents include aliphatic hydrocarbons like hexane, heptane, and mineral spirits; aromatic hydrocarbons like toluene, naphthas, and xylene; esters like ethyl acetate, butyl acetate, and glycol ether acetates such as propylene glycol methyl ether acetate; and ethers like tetrahydrofuran. After the grinding processing step, excess solvent may be removed by filtration to yield a paste preferably 30 to 80% by weight nonvolatiles. Further aspects of manufacture of the metallic pigment are contained in US Pat. No. 4,565,716, the entire contents of which are incorporated herein by reference.

Commercial aluminum flake pigment pastes are available from companies such as Silberline, Tamaqua, PA; Aluminum Company of America, Pittsburgh, PA; Obron Atlantic Corp., Painesville, OH; Reynolds Metals Company, Richmond, VA; and Toyo Aluminum KK, Higashiku, Osaka, Japan in various grades, types and particle sizes. For certain waterborne paint applications, such as automotive basecoats, non-leafing aluminum flake pigments, such as Sparkle Silver® 5245 AR aluminum paste from Silberline or 8160 AR aluminum paste from Obron, can be utilized.

According to the invention, the combination of optically-variable thin-film pigment and the metallic pigment is used in a coating composition along with a binder resin. Useful pigment:binder ratios range from 0.03:1 to 0.30:1, and preferably 0.05:1 to 0.15:1. The binder used in the present invention may be selected from of any of a number of polymers known in the art. Polymers known in the art to be useful in coating compositions include acrylics, vinyls, polyurethanes, polycarbonates, polyesters, alkyds, epoxy resins, and polysiloxanes. Preferred polymers include acrylics and polyurethanes. The resin may be of the thermoplastic type, but are preferably crosslinkable, and thus comprise one or more type of cross-linkable functional groups. Such groups include, for example, hydroxy, isocyanate, amine, epoxy, acrylate, vinyl, silane, and acetoacetate groups. These groups may be masked or blocked in such a way so that they are unblocked and available for the cross-linking reaction under the desired curing conditions, generally elevated temperatures (i.e., thermoset). Useful cross-linkable functional groups include hydroxy, epoxy, acid, anhydride, silane, and acetoacetate groups. Preferred cross-linkable functional groups include hydroxy functional groups and amino functional groups.

The above-described polymers may be self-crosslinkable, or the coating composition may include a separate cross-linking agent that is reactive with the functional groups of the polymer. When the polymer comprises hydroxy functional groups, for example, the cross-linking agent may be an aminoplast resin, isocyanate and blocked isocyanates (including isocyanurates), and acid or anhydride functional cross-linking agents.

The coating composition of the present invention may be solvent-borne or water-borne. Suitable binder resins for water-borne coating compositions are water-dispersible or water-soluble ionic or nonionic resins. Anionic or nonionic resins are preferred for use in topcoat applications. Examples of water-dispersible polymers used for topcoats are contained in US Patent Nos. 4,794,147; 4,791,168; and 4,518,724, all of which are incorporated herein by reference. Such systems may also include a crosslinker, as described above. Polymeric-type melamine crosslinkers are often preferred for water-borne coating compositions where the binder resin is anionically stabilized, as such polymeric-type melamines do not require strong acid catalysis. When the film-forming resin is nonionically stabilized, a polymeric melamine may be used or a monomeric melamine may be used in conjunction with a strong acid catalyst like a sulfonic acid or blocked sulfonic acid.

A solvent may optionally be utilized in the coating composition of the present invention. Although the composition of the present invention may be utilized, for example, in the form of substantially solid powder, or a dispersion, it is usually preferred that the composition is in a substantially liquid state, which can be accomplished with the use of a solvent. This solvent should act as a solvent with respect to both the binder resin as well as any crosslinking agents used. In general, as is well-known in the art, depending on the solubility characteristics of the components in the coating composition, the solvent can be any of a number of organic solvent(s) and/or water. In one preferred embodiment, the solvent is a polar organic solvent. More preferably, the solvent is a polar aliphatic solvents or polar aromatic solvents, such as a ketone, ester, acetate, aprotic amide, aprotic sulfoxide, or aprotic amine. Examples of useful solvents include methyl ethyl ketone, methyl isobutyl ketone, m-amyl acetate, ethylene glycol butyl ether-acetate, propylene glycol monomethyl ether acetate, xylene, n-methylpyrrolidone, or blends of aromatic hydrocarbons.

In another preferred embodiment, the solvent is water or a mixture of water with small amounts of aqueous co-solvents. Preferred co-solvents include acetates such as butyl acetate, hexyl acetate, and octyl acetate; glycol ethers and glycol ether acetates, such as propylene glycol ether and propylene glycol monomethyl ether acetate; and ketones, such as methyl propyl ketone, methyl isobutyl ketone, and methyl hexyl ketone. Glycol ethers and glycol ether acetates are especially preferred.

For most liquid coating compositions, the solvent may be present in an amount of from about 0.01 weight percent to about 99 weight percent, preferably from about 10 weight percent to about 60 weight percent, and more preferably from about 30 weight percent to about 50 weight percent.

It may be desirable to include small amount of rheology control agents, for example fumed silicas, hectorite clays, bentonite clays, or cellulosics like cellulose acetate butyrate. Such materials are usually used at levels of less than 10% based on the total solid weight of reactants. Rheology control agents are used to control the flow and levelling of the composition during application and curing steps. The rheology control agent is also useful for controlling the metallic appearance of the coating. Such materials may help "fix" the pigment flake surface in an alignment parallel to the surface of the coating to maximize the brightness when viewed head-on and to maximize the darkness when viewed obliquely.

The coating composition of the invention may further comprise additional pigment(s). In one preferred embodiment, the coating composition of the invention further comprises a black pigment, as described in the U.S. patent application entitled "Coating Composition Containing Optically-Variable Pigment and Black Pigment", filed on even date herewith in the name of Daniel W. Johnson. In another preferred embodiment, the optically-variable thin-film pigment is a dichroic pigment, and the coating composition further comprises an interference mica in one of the colors of the optically-variable thin-film pigment, as described in the U.S. patent application entitled "Coating Composition Containing Optically-Variable Dichroic Pigment and Interference Mica Pigment", filed on even date herewith in the name of Daniel W. Johnson. The coating composition may also contain a transparent pigment to operate in a subtractive mode to modify the colors or block unwanted colors of the optically-variable thin-film pigment. For example, in the case of a gold-to-green shifting pigment, the addition of yellow dyes or transparent yellow pigments blocks the blue reflective light at large viewing angles by absorbing the undesired colors. Combinations of any of the above-described supplementary pigments with each other or with other known pigments may also be made.

The coating compositions according to the invention can contain optional ingredients such as wetting agents, surfactants, defoamers, antioxidants, UV absorbers, light stabilizers, plasticizers, and so forth. Examples of surfactants and wetting agents include alkyl imidazolines such as those available from Ciba-Geigy Industrial Chemicals as Amine C®, acetylenic alcohols available from Air Products and Chemicals as Surfynol® 104. These optional ingredients, when present, constitute from about 0 to 20 percent by weight of resin solids.

The prepared coating composition is applied to a substrate by any of a number of conventional means, for example by spraying, brushing, dipping or flowing. The preferred methods of application are by spraying or electrostatic spraying. These methods are widely used, especially in the application of automotive coatings. For example, the coating may be applied using a Model 62 syphon spray gun (available from Binks Manufacturing Corp., Franklin Park, Ill.) with 50-80 psi atomizing air pressure.

The substrate to which the coating composition of this invention is to be applied may be, for example, metal, ceramic, plastic, glass, paper, or wood. The substrate may also be any of the aforementioned materials precoated with this or another coating composition. The coating compositions of this invention have been found to be particularly useful over precoated steel or plastic substrates in automotive applications. They are particularly suited to use over primed automotive substrates as topcoat formulations or basecoat formulations that are overcoated with clearcoat formulations.

After application of the coating composition to the substrate, the coating is cured, preferably by heating at a temperature and for a length of time sufficient to cause the conversion of all or nearly all of the reactive groups. The cure temperature is usually from 115°C to 180°C, and the length of cure is usually 15 minutes to 60 minutes. Preferably, the coating is cured at 120-150°C for 20 to 30 minutes. The thickness of the cured coating can be from 1 to 150 microns, but when used as an automotive basecoat the coating thickness is generally from 10 to 30 microns.

In a particularly preferred embodiment, the composition of the invention is used as the pigmented basecoat of a composite color-plus-clear coating. Such composite coatings are popular for their depth of color and liquid glossy surface appearance. They have found particularly wide acceptance in the field of automotive coatings. The basecoat may be cured before the clearcoat is applied or the basecoat may be given a wet-on-wet application of a clearcoat. By the term "wet-on-wet" it is meant that after application the basecoat is allowed to flash, or dry, to remove most of the water and other solvent that it contained, but it is not cured before the clearcoat composition is applied. After the clearcoat composition is applied, it is allowed to flash or dry for a period of time, then the basecoat and the clearcoat are cured together.

The clearcoat may be a coating composition according to this invention or another composition known to the art to have utility as a clearcoat. The clearcoat does not necessarily need to use the cure mechanism used by the basecoat, although the cure mechanisms used must not interfere with one another.

The basecoat may be applied in one or two layers, with a short period between application of layers to allow solvent and water to evaporate (termed a "flash" period). After application, the basecoat may be further dried, preferably at a slightly elevated temperature, as in a 120°F oven, for a period of 5 to 20 minutes before the clear coat composition is applied. The clearcoat composition is preferably applied by spraying, in one layer, or preferably two layers with a short flash between layers. The clearcoat composition is allowed to flash under ambient or heated conditions for 1-20 minutes. The uncured coatings are then cured, usually by thermoset methods as described hereinabove. The resulting appearance and physical properties are excellent.

The invention is further described by the following examples.

### Example 1

A coating composition was prepared having the following formulation:

| Resin Vehicle Containing: | |
|---|---|
| 18.01% | acrylic microgel |
| 33.99% | melamine resin crosslinker |
| 48.00% | OH-functional acrylic resin binder |
| | (50.31 parts by weight total vehicle solids per 100 parts by weight paint) |

| Pigment Containing: | |
|---|---|
| 75% | optically-variable thin-film pigment flakes |
| 25% | Silberline® 5245 aluminum flake pigment (7.55 parts by weight total pigment per 100 parts by weight paint) |

| Additives: | |
|---|---|
| polybutyl acrylate | 0.20 parts/100 parts paint |
| Tinuvin® 1130 | 0.50% (based on vehicle solids) |
| Fumed silica | 0.50% (based on vehicle solids) |
| Nacure® 5225 | 0.50% (based on vehicle solids) |
| methanol | 3.0 parts/100 parts paint |

The coating compositions were reduced to 17" #4 Ford Cup with n-butyl acetate, and sprayed onto a primed metal panel, flash dried, and overcoated with a clearcoat containing an OH-functional acrylic resin and a melamine resin crosslinker. The coatings were then baked for 30 minutes at 121°C to cure to a hard durable coating having a basecoat thickness of 15-20 µm and a clearcoat thickness of 41-46 µm. For comparison, an identical panel was prepared, except that the pigment was composed of 100% of the optically-variable thin-film pigment. The panel prepared according to the invention exhibited a softer, more subtle dichroic effect versus the comparison panel while continuing to maintain the visual characteristics of the dichroic effect.

The invention has been described in detail with reference to particular embodiments thereof.

## Claims

1. A coating composition comprising a polymer resin binder and optically variable thin film pigment flakes, said pigment flakes having a multilayer thin film interference structure comprising a metal reflector layer having first and second parallel planar surfaces, and, disposed on at least one of said first and second planar surfaces, at least one transparent dielectric layer, said coating composition further comprising a metallic pigment of the same color as the metal in the metal reflector layer of the multilayer thin film interference structure.

2. A coating composition according to claim 1 wherein the multilayer thin film interference structure comprises, disposed on both of said first and second planar surfaces, at least one transparent dielectric layer.

3. A coating composition according to claim 1 or 2 wherein the multilayer thin film interference structure further comprises, disposed on at least one of said first and second planar surfaces, at least one semi-opaque metal layer.

4. A coating composition according to claims 1 to 3 wherein the multilayer thin film interference structure further comprises, disposed on both of said first and second planar surfaces, at least one semi-opaque metal layer.

5. A coating composition according to claims 1 to 4 wherein the layer configurations on each side of said first and second planar surfaces are symmetrical with each other.

6. A coating composition according to claims 1 to 5 wherein the multilayer thin film interference structure comprises at least one transparent dielectric layer having an index of refraction of 1.65 or less.

7. A coating composition according to claims 1 to 6 wherein said metallic pigment is a metallic flake pigment.

8. A coating composition according to claims 1 to 7 wherein said metal reflector layer and said metallic pigment are both aluminum.

9. A coating composition according to claims 1 to 8 wherein said metallic pigment is an aluminum flake pigment.

10. A coating composition according to claims 1 to 9 wherein the metallic pigment is present in an amount of 3 to 25%, based on total pigment weight.

11. A coating composition according to claims 1 to 10 wherein said combination of optically-variable pigment and said metallic pigment, and said binder are present in a pigment:binder ratio of from 0.03:1 to 0.30:1.

12. A coating comprising a substrate having thereon a layer of the coating composition according to claims 1 to 11.

13. A coating according to claim 12 wherein said layer of the coating composition is the colored layer of a color-plus-clear composite coating.

14. A coating according to claim 12 or 13 wherein the substrate is an automotive body panel.

## Patentansprüche

1. Beschichtungszusammensetzung, enthaltend ein polymeres Harz als Bindemittel, optisch variable dünne Pigmentplättchen mit einer mehrschichtigen Dünnschichtinterferenzstruktur aus einer Metallreflektorschicht mit einer ersten und einer zweiten parallelen planaren Oberfläche und mindestens einer auf mindestens einer der ersten und zweiten planaren Oberflächen abgeschiedenen transparenten dielektrischen Schicht sowie außerdem auch noch ein Metallpigment mit der gleichen Farbe wie das Metall in der Metallreflektorschicht der mehrschichtigen Dünnschichtinterferenzstruktur.

2. Beschichtungszusammensetzung nach Anspruch 1, wobei die mehrschichtige Dünnschichtinterferenzstruktur mindestens eine sowohl auf der ersten als auch auf der zweiten planaren Oberfläche abgeschiedene transparente dielektrische Schicht aufweist.

3. Beschichtungszusammensetzung nach Anspruch 1 oder 2, wobei die mehrschichtige Dünnschichtinterferenzstruktur ferner mindestens eine auf mindestens einer der ersten und zweiten planaren Oberflächen abgeschiedene semiopake Metallschicht aufweist.

4. Beschichtungszusammensetzung nach den Ansprüchen 1 bis 3, wobei die mehrschichtige Dünnschichtinterferenzstruktur ferner mindestens eine sowohl auf der ersten als auch auf der zweiten planaren Oberfläche abgeschiedene semiopake Metallschicht aufweist.

5. Beschichtungszusammensetzung nach den Ansprüchen 1 bis 4, wobei der Schichtenaufbau auf jeder Seite der ersten und der zweiten planaren Oberfläche symmetrisch ist.

6. Beschichtungszusammensetzung nach den Ansprüchen 1 bis 5, wobei die mehrschichtige Dünnschichtinterferenzstruktur mindestens eine transparente dielektrische Schicht mit einem Brechungsindex von höchstens 1,65 aufweist.

7. Beschichtungszusammensetzung nach den Ansprüchen 1 bis 6, wobei es sich bei dem Metallpigment um ein Metallplättchenpigment handelt.

8. Beschichtungszusammensetzung nach den Ansprüchen 1 bis 7, wobei sowohl die Metallreflektorschicht als auch das Metallpigment aus Aluminium bestehen.

9. Beschichtungszusammensetzung nach den Ansprüchen 1 bis 8, wobei es sich bei dem Metallpigment um ein Aluminiumplättchenpigment handelt.

10. Beschichtungszusammensetzung nach den Ansprüchen 1 bis 9, wobei das Metallpigment in einer Menge von 3 bis 25%, bezogen auf das Pigmentgesamtgewicht, vorliegt.

11. Beschichtungszusammensetzung nach den Ansprüchen 1 bis 10, wobei die Kombination aus optisch variablem Pigment und Metallpigment und das Bindemittel in einem Pigment-Bindemittel-Verhältnis von 0,03:1 bis 0,30:1 vorliegen.

12. Überzug aus einem Substrat mit einer Schicht aus der Beschichtungszusammensetzung nach den Ansprüchen 1 bis 11.

13. Überzug nach Anspruch 12, wobei es sich bei der Schicht aus der Beschichtungszusammensetzung um die Farbschicht einer Farblack-Klarlack-Verbundbeschichtung handelt.

14. Überzug nach Anspruch 12 oder 13, wobei es sich bei dem Substrat um ein Autokarosserieblech handelt.

## Revendications

1. Composition de revêtement comprenant un liant à résine polymère et des paillettes de pigment optiquement variable en films minces, lesdites paillettes de pigment ayant une structure multicouche en films minces à interférences comprenant une couche réfléchissante métallique ayant des première et deuxième surfaces planes parallèles, et, disposée sur au moins l'une desdites première et deuxième surfaces planes, au moins une couche diélectrique transparente, ladite composition de revêtement comprenant en outre au moins un pigment métallique de la même couleur que le métal dans la couche réfléchissante métallique de la structure multicouche en films minces à interférences.

2. Composition de revêtement selon la revendication 1, dans laquelle la structure multicouche en films minces à interférences comprend, disposée l'une et l'autre sur desdites première et deuxième surfaces planes, au moins une couche diélectrique transparente.

3. Composition de revêtement selon la revendication 1 ou 2, dans laquelle la structure multicouche en films minces à interférences comprend en outre, disposée sur au moins l'une desdites première et deuxième surfaces planes, au moins une couche métallique semi-opaque.

4. Composition de revêtement selon les revendications 1 à 3, dans laquelle la structure multicouche en films minces à interférences comprend en outre, disposée sur l'une et l'autre desdites première et deuxième surfaces planes, au moins une couche métallique semi-opaque.

5. Composition de revêtement selon les revendications 1 à 4, dans laquelle les configurations de couches sur chaque face desdites première et deuxième surfaces planes sont symétriques l'une par rapport à l'autre.

6. Composition de revêtement selon les revendications 1 à 5, dans laquelle la structure multicouche en films minces à interférences comprend au moins une couche diélectrique transparente ayant un indice de réfraction de 1,65 ou moins.

7. Composition de revêtement selon les revendications 1 à 6, dans laquelle ledit pigment métallique est un pigment en paillettes métalliques.

8. Composition de revêtement selon les revendications 1 à 7, dans laquelle ladite couche réfléchissante métallique et ledit pigment métallique sont tous deux de l'aluminium.

9. Composition de revêtement selon les revendications 1 à 8, dans laquelle ledit pigment métallique est un pigment en paillettes d'aluminium.

10. Composition de revêtement selon les revendications 1 à 9, dan laquelle le pigment métallique est présent en une quantité de 3 à 25%, par rapport au poids total de pigment.

11. Composition de revêtement selon les revendications 1 à 10, dans laquelle ladite combinaison de pigment optiquement variable et dudit pigment métallique, et ledit liant sont présents en un rapport pigment:liant de 0,03:1 à 0,30:1.

12. Revêtement comprenant un substrat recouvert d'une couche de la composition de revêtement selon les revendications 1 à 11.

13. Revêtement selon la revendication 12, dans lequel ladite couche de la composition de revêtement est la couche colorée d'un revêtement composite couleur-plus-transparence.

14. Revêtement selon la revendication 12 ou 13, dans lequel le substrat est un panneau de carrosserie automobile.
